# FASCICULE DE BREVET EUROPEEN

(11) **EP 0 434 483 B1**
(45) Date de publication et mention de la délivrance du brevet: **22.05.1996**
(21) Numéro de dépôt: 90403329.7
(22) Date de dépôt: 23.11.1990
(51) Int. Cl.: G06F 9/38

(54) **Processeur à plusieurs unités de traitement microprogrammées**
Prozessor mit mehreren mikroprogrammierten Ausführungseinheiten
Processor with plural microprogrammed execution units

(30) Priorité: 30.11.1989 FR 8915776
(43) Date de publication de la demande: 26.06.1991
(73) Titulaire: BULL S.A., F-78430 Louveciennes (FR)
(72) Inventeur: Franzetti, Hubert, F-75764 Paris Cedex 16 (FR); Dolidon, Thierry, F-75764 Paris Cedex 16 (FR); Vallet, Philippe, F-75764 Paris Cedex 16 (FR); Lamarche, Marie-Odile, F-75764 Paris Cedex 16 (FR); Vinot, Annie, F-75764 Paris Cedex 16 (FR)
(74) Mandataire: Colombe, Michel

(56) Documents cités:
- EP-A- 0 260 409
- IEEE TRANSACTIONS ON COMPUTERS, vol. C-27, no. 3, mars 1978, pages 270-275, IEEE, New York, US; L.C. HIGBIE: "Overlapped operation with microprogramming"

## Description

L'invention se situe dans le domaine des systèmes informatiques et concerne un mode de réalisation particulier de processeurs utilisables dans ces systèmes.

Habituellement, un système informatique est constitué d'un sous-système central pouvant communiquer avec un ou plusieurs sous-systèmes périphériques. Le sous-système central est composé d'un ou de plusieurs processeurs reliés, par exemple par l'intermédiaire d'un bus, à une mémoire centrale et à une ou plusieurs unités d'entrée-sortie. Les unités d'entrée-sortie permettent les communications entre le sous-système central et les sous-systèmes périphériques.

Chaque processeur a pour fonction l'exécution des instructions des programmes contenus dans la mémoire centrale. Pour cela, un processeur comporte des moyens d'adressage de la mémoire pour accéder aux instructions et aux données nécessaires au traitement. Pour diminuer le temps d'accès moyen à ces instructions et à ces données, les processeurs sont habituellement munis d'une antémémoire (souvent appelée "mémoire cache") servant de tampon entre la mémoire centrale et les circuits de traitement du processeur.

Pour les petits systèmes, avec la technologie "VLSI" actuelle, les circuits de traitement du processeur peuvent être intégrés dans un seul circuit intégré. Par contre, pour des processeurs plus puissants, malgré la constante augmentation de la densité d'intégration, les circuits d'un même processeur doivent être répartis sur plusieurs circuits intégrés. Pour cela, le processeur est subdivisé en plusieurs unités fonctionnelles qui correspondent chacunes à un ou plusieurs circuits intégrés. Ainsi, chaque circuit intégré du processeur peut constituer une unité de traitement spécialisée qui contribue à l'exécution de l'ensemble des instructions machine exécutables par le processeur. Bien entendu, chaque unité de traitement doit pouvoir communiquer avec la mémoire centrale par l'intermédiaire de l'antémémoire. De plus, selon le découpage fonctionnel choisi, on doit prévoir des liaisons spécifiques permettant des communications entre ces unités.

Parmi l'ensemble des circuits de traitement contenus dans les diverses unités du processeur, on distingue habituellement une partie commande, souvent appelée "bloc de commande", une partie traitement qui est généralement appelée "chemin de données". Le bloc de commande pilote les circuits d'adressage et le chemin de données en fonction des instructions reçues. Les circuits d'adressage commandent l'antémémoire pour piloter le transfert des instructions et des opérandes vers les circuits de traitement et le transfert des résultats élaborés par ces circuits vers l'antémémoire.

Dans le cas des processeurs ayant un jeu d'instructions important, on a généralement recours à la technique de la microprogrammation pour réaliser le bloc de commande. Le bloc de commande est alors essentiellement constitué d'un microséquenceur câblé associé à une mémoire de microprogramme. En fonction du code opératoire de l'instruction à exécuter et de l'état logique du processeur, le microséquenceur exécute, généralement à chaque cycle, un adressage de la mémoire du microprogramme. La mémoire fournit en sortie des mots de microprogramme qui déclenchent l'envoi de signaux de commande aux différents circuits. Bien entendu, le bloc de commande peut aussi inclure des circuits entièrement câblés, notamment pour exécuter plus rapidement certaines fonctions que l'on souhaite optimiser.

Une solution habituelle pour réaliser le bloc de commande microprogrammé d'un processeur consiste à prévoir une unité spécialisée pour cette fonction. Le bloc de commande est alors entièrement contenu dans cette unité qui peut être réalisée sous la forme d'un circuit intégré, généralement associé à une ou plusieurs mémoires de microprogramme externes. Pour illustrer ce genre de bloc de commande, on peut citer la demande de brevet européen déposée sous le n° 85 113207.6, publiée sous le n° EP-A-178671 le 23 avril 1986 et ayant pour titre "Distributed Control Store Architecture".

Avec cette solution, chaque unité de traitement est commandée de façon centralisée par le bloc de commande. Il en résulte que chaque unité contribue à chaque instant à l'exécution d'une même microinstruction. Or, nous avons vu que les différentes unités de traitement du processeur correspondent à une partition de l'ensemble des fonctions du processeur.

Par exemple, une première unité sera affectée à la fonction adressage, une autre unité aux traitements logiques et arithmétiques binaires et décimaux, une troisième unité aux pérations en virgule flottante. Avec ce genre de découpage fonctionnel, l'exécution d'une instruction, c'est-à-dire d'un microprogramme associé, n'implique généralement pas le fonctionnement simultané effectif de ces trois unités. Par exemple, si l'instruction consiste à additionner un opérande contenu en mémoire au contenu d'un registre du processeur et à ranger le résultat dans ce registre, son exécution comprend les étapes suivantes :
1) calcul de l'adresse réelle de l'opérande à partir de l'adresse logique définie par l'instruction ;
2) adressage de la mémoire, chargement de l'opérande dans l'unité de calcul et exécution de l'opération ;
3) écriture du résultat dans le registre.

Selon cet exemple, on voit que seule l'unité d'adressage est utilisée pendant l'étape 1, seule l'unité de calcul est utilisée pendant les étapes 2 et 3. Ainsi, lorsqu'une unité travaille, les autres sont inactives, ce qui ne constitue pas une utilisation optimale du matériel.

C'est par exemple le cas du document IEE TRANSACTIONS ON COMPUTERS, vol C-27, n° 3, mars 1978, pages 270-275 ; L.C. HIGBIE : "Overlapped Operation with Microprogramming". Ce document décrit un processeur formé d'unités fonctionnelles pouvant fonctionner en parallèle sur un même flot d'instructions, chacune étant microprogrammée. Chaque instruction est dirigée vers et complètement traitée par une unité. Une unité doit donc attendre la fin du traitement d'une instruction précédente traitée par une autre unité pour exécuter le traitement de l'instruction qui lui est confiée. Ce temps d'attente lié à la totalité de l'exécution d'une instruction ralentit le fonctionnement du processeur et ne permet pas une utilisation optimale de ses différentes unités.

Aussi, l'invention revendiquée a pour but de remédier à ces inconvénients en proposant un processeur à plusieurs unités de traitement microprogrammées pouvant fonctionner avec un maximum d'autonomie de façon à pouvoir optimiser l'utilisation de ces unités et notamment pour permettre un fonctionnement de type pipe-line selon lequel plusieurs unités exécutent simultanément des microprogrammes d'exécution d'instructions différentes.

Cependant, pour optimiser au mieux le fonctionnement, il faut résoudre certaines difficultés qu'entraîne l'absence de centralisation du bloc de commande.

En particulier, chaque unité doit évidemment détecter le début et la fin de chaque instruction mais aussi déterminer à chaque instant si elle peut exécuter son microprogramme spécifique défini par l'instruction en cours car, lors d'un fonctionnement en mode "pipeline", des instructions différentes doivent pouvoir s'exécuter simultanément dans plusieurs unités.

Il faut donc prévoir un mécanisme de synchronisation des microprogrammes des différentes unités de sorte qu'il s'exécutent dans un ordre déterminé de façon à bien réaliser les fonctions précises qui correspondent aux instructions.

Dans ce but, l'invention a pour objet un processeur pour système de traitement de données comprenant une pluralité d'unités de traitement microprogrammées se répartissant l'ensemble des fonctions dudit processeur, chaque unité étant affectée à l'exécution d'un sous-ensemble de fonctions dudit processeur, lesdites unités étant reliées à des moyens de mémorisation contenant les instructions des programmes à exécuter et les opérandes, l'une au moins desdites unités étant une unité d'adressage desdits moyens de mémorisation pour l'obtention des et des opérandes, lesdites unités microprogrammées comportant chacune leur propre bloc de commandes pour décoder les instructions fournies par les moyens de mémorisation et exécuter de façon autonome les fonctions définies par lesdites instructions, ledit processeur étant caractérisé en ce qu'une instruction est subdivisée en plusieurs étapes successives chacune confiée à une unité de traitement particulière, en ce que chaque unité microprogrammée comporte des moyens de synchronisation pour autoriser ou interrompre l'exécution du microprogramme défini par l'instruction en cours dans ladite unité et en ce que lesdits moyens de synchronisation interrompent ladite exécution tant que :
- soit un opérande contenu dans lesdits moyens de mémorisation et nécessaire à ladite exécution n'est pas effectivement reçue par ladite unité,
- soit un résultat attendu par ladite unité et calculé par une autre unité n'est pas effectivement reçu par ladite unité,
- soit un résultat calculé dans ladite unité ne peut pas être effectivement transmis à l'unité ou aux moyens de mémorisation destinataires dudit résultat.

Quels que soient le découpage fonctionnel et le nombre d'unités, les moyens de synchronisation définis précédemment permettent une très grande souplesse de fonctionnement du processeur. Comme nous l'avons déjà signalé, l'exécution d'une instruction peut être subdivisée en plusieurs étapes successives où le traitement de chaque étape est confié à une unité déterminée, en fonction du découpage fonctionnel choisi. Selon le type d'instruction, une étape devant s'exécuter dans une unité pourra nécessiter l'obtention d'un opérande contenu en mémoire ou l'obtention d'un résultat calculé dans une autre unité lors d'une étape précédente de la même instruction. La synchronisation proposée se fonde sur un mécanisme de surveillance des échanges d'opérandes et de résultats qui assure que, pour chaque unité et pour chaque étape, les opérations affectées à cette unité et concernant une instruction donnée ne seront exécutées que si les étapes précédentes de la même instruction ont bien été exécutées et ceci est le cas si un opérande ou un résultat attendu est bien reçu par l'unité. Dans chaque unité, ce mécanisme assure en outre que toutes les opérations qui devaient être effectuées dans cette unité et concernant l'instruction précédente ont bien été effectuées avant d'autoriser l'exécution de l'instruction en cours et ceci est le cas si un résultat qui devait être transmis par l'unité au cours de l'instruction précédente a bien été transmis et reçu par son destinataire.

On peut envisager plusieurs solutions pour mettre en oeuvre cette synchronisation. Il est clair cependant que la subdivision en étapes des instructions devra tenir compte du découpage fonctionnel et du mécanisme de synchronisation proprement dit. Pour cela les microprogrammes prévus pour chaque unité devront être élaborés en respectant certaines règles de microprogrammation qui découlent de ces contraintes.

L'application de ces règles est à la portée des spécialistes en microprogrammation et ne sera donc pas détaillée dans la présente description.

Avantageusement, l'invention sera réalisée en essayant d'utiliser de façon optimale les ressources partagées entre les unités et la mémoire. Ces ressources sont essentiellement constituées par des liaisons pour l'échange des données. Il convient également que ces liaisons autorisent toutes les simultanéités envisageables lors du fonctionnement, en particulier en mode "pipeline" où au même instant un résultat et un opérande sont susceptibles d'être transmis.

Dans ce but et selon un mode de réalisation préféré de l'invention, le processeur est en outre caractérisé en ce que lesdits moyens de mémorisation comportent des moyens d'interface reliés à un premier bus, appelé bus opérande, et à un deuxième bus, appelé bus résultat, lesdits premier et second bus servant respectivement à la lecture des opérandes et à l'écriture des résultats dans lesdits moyens de mémorisation, en ce que chaque unité est reliée respectivement par une première et une seconde interface auxdits bus opérande et bus résultat, en ce que chaque unité comprend des moyens pour recevoir et détecter un premier indicateur de propriété associé au bus opérande et des moyens pour émettre vers les autres unités ledit premier indicateur de propriété, en ce que chaque unité comprend des moyens pour recevoir et détecter un second indicateur de propriété associé au bus résultat et des moyens pour émettre vers les autres unités ledit second indicateur de propriété, en ce que lesdites unités sont reliées entre elles par des premières et secondes liaisons de contrôle permettant respectivement la transmission desdits premier et second indicateurs, en ce qu'une des conditions de réception effective d'un opérande par une unité est la détection par ladite unité dudit premier indicateur et en ce qu'une des conditions d'émission effective d'un résultat par une unité est la détection dans ladite unité dudit second indicateur.

Selon ce mode de réalisation, les bus opérande et résultat sont séparés mais chacun est partagé entre les unités. Grâce aux indicateurs de propriété associés, une seule unité à la fois est propriétaire du bus concerné. D'autre part, le bus opérande est géré par un mécanisme de propriété de réception tandis que le bus résultat l'est par un mécanisme de propriété d'émission. Ces dispositions suppriment tout risque de conflits entre les unités et simplifient la détection pour chaque unité des conditions de synchronisation basées sur la réception effective d'un opérande et l'émission effective d'un résultat.

En général, l'antémémoire qui fournit les opérandes a un fonctionnement asynchrone qui nécessite l'élaboration de signaux d'acquittement pour notifier à l'extérieur qu'une donnée préalablement adressée est disponible en sortie de la mémoire. Aussi ce signal de notification d'émission servira également de condition de synchronisation.

Dans ce cas de réalisation de l'invention, le processeur est en outre caractérisé en ce que lesdits moyens de mémorisation sont reliés auxdites unités par des liaisons de notification d'émission d'opérande associées au bus opérande et comprend des moyens pour transmettre sur ces liaisons des signaux d'émission d'opérande lorsque lesdits moyens de mémorisation émettent un opérande, en ce que chaque unité comprend des moyens pour recevoir et détecter lesdits signaux d'émission d'opérande et en ce qu'une autre condition de réception effective d'un opérande par une unité est la détection par ladite unité d'un signal d'émission attendu.

De façon analogue, la condition d'émission effective d'un résultat peut être déterminée dans chaque unité en fonction de signaux de disponibilité émis par les autres unités ou l'antémémoire.

D'autre part, pour déterminer la condition de réception effective d'un résultat, on peut prévoir un signal de notification d'émission et un signal de destinataire, ces deux signaux étant émis par l'unité émettrice du résultat.

Selon ce mode de réalisation, le processeur sera caractérisé en ce que lesdites unités sont reliées entre elles par des liaisons de notification d'émission de résultat associées au bus résultat, lesdites unités comprenant des moyens pour échanger sur ces liaisons des signaux d'émission de résultat et des signaux de destinataire, en ce que lesdits signaux d'émission de résultat et lesdits signaux de destinataire sont envoyés par l'unité propriétaire du bus résultat lorsque ladite unité propriétaire envoie des données sur le bus résultat à l'unité identifiée par lesdits signaux de destinataire et en ce que la condition de réception effective d'un résultat par une unité est la détection d'un signal d'émission de résultats et la coïncidence desdits signaux de destinataire avec l'identité de ladite unité.

D'autres caractéristiques et détails de réalisation de l'invention seront exposés dans la suite de la description en relation avec les figures :
- la figure 1 représente un système informatique comportant le processeur selon l'invention ;
- la figure 2 représente une antémémoire et ses circuits interfaces avec les unités de traitement du processeur selon un mode de réalisation préféré de l'invention ;
- la figure 3 représente de façon schématique une unité de traitement du processeur selon l'invention ;
- la figure 4 représente les principaux signaux échangés entre les unités de traitement et avec l'antémémoire ;
- la figure 5 illustre le fonctionnement en deux phases des circuits des unités de traitement ;
- la figure 6 représente les principaux éléments d'un bloc de commande d'une unité de traitement pour la mise en oeuvre de l'invention ;
- la figure 7 représente le circuit de synchronisation de chaque unité de traitement.

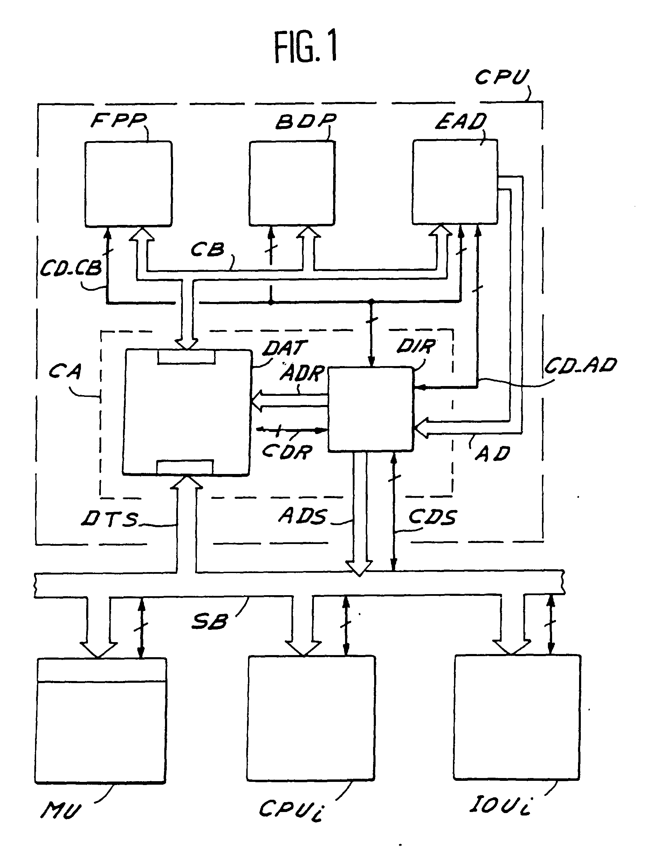

Le système de la figure 1 est composé de plusieurs processeurs CPU, CPUᵢ reliés à un bus système SB de façon à pouvoir communiquer entre eux et avec une mémoire centrale MU et des unités d'entrée-sortie IOUᵢ. Le nombre de processeurs CPUᵢ et d'unités d'entrée-sortie IOUᵢ peut être variable, de même que le nombre de modules mémoire constituant la mémoire centrale MU. Tous ces éléments forment ce que l'on appelle le sous-système central d'un système informatique pouvant communiquer avec un ou plusieurs sous-systèmes périphériques (non représentés) par l'intermédiaire des unités d'entrée-sortie IOUᵢ.

La figure 1 représente de façon plus détaillée les principaux composants d'un des processeurs CPU. Ce processeur est relié au bus système SB par l'intermédiaire d'une antémémoire CA (souvent appelée mémoire "cache") servant de tampon entre la mémoire principale MU et des unités d'exécution EAD, BDP, FPP du processeur. L'antémémoire CA est composée essentiellement de circuits mémoire DAT de capacité inférieure à la mémoire centrale MU et d'un contrôleur DIR pour gérer les interfaces avec, d'une part, le bus système SB et, d'autre part, les unités d'exécution. Ces unités et le contrôleur peuvent être réalisés sous la forme de circuits intégrés VLSI.

Les circuits mémoire DAT échangent les données avec le bus système SB par l'intermédiaire de lignes de données DTS. Le contrôleur DIR communique avec le bus SB par les lignes d'adresse ADS et les lignes de commande CDS.

A titre d'exemple de réalisation non limitatif, une des unités d'exécution EAD est spécifiquement affectée aux opérations d'adressage en particulier pour l'obtention des instructions et des opérandes à partir de l'antémémoire CA. L'unité EAD est alors reliée au contrôleur DIR par des lignes d'adresse AD véhiculant les signaux d'adresse réelle calculée. L'unité EAD et le contrôleur DIR sont également reliés entre eux par des signaux de contrôle d'adressage CD-AD. Ces signaux d'adresse et de contrôle sont pris en compte par le contrôleur DIR pour commander à son tour les circuits mémoire DAT par l'intermédiaire de lignes d'adresse ADR et de lignes de contrôle interne CDR. En réponse à ces informations, les circuits de mémoire DAT peuvent échanger les instructions, les opérandes et les résultats avec les unités d'exécution EAD, BDP, FPP par l'intermédiaire de lignes CB.

Comme le processeur selon l'invention possède des unités d'exécution pouvant exécuter de façon autonome leur propre microprogramme, ces unités sont reliées entre elles et avec le contrôleur DIR par l'intermédiaire de lignes de contrôle CD-CB de façon à permettre la synchronisation et la cohérence des opérations exécutées dans ces unités.

Selon l'exemple représenté, l'exécution est confiée à trois unités se répartissant les fonctions suivantes :
- traduction des adresses virtuelles en adresses réelles et adressage de l'antémémoire pour EAD ;
- calculs binaires et décimaux pour BDP ;
- calculs en virgule flottante (calculs scientifiques) pour FPP.

Il convient de noter que l'invention ne se limite pas à ce découpage fonctionnel particulier. D'autre part, pour des raisons de clarté, la figure 1 ne représente pas les circuits d'horloge ni les dispositifs de maintenance associés.

En dehors du rôle particulier des informations et signaux que les unités échangent entre elles et avec l'antémémoire, le système de la figure 1 se comporte comme un système classique. Il est donc inutile de décrire les aspects connus de son fonctionnement pour se consacrer dans la suite de la description aux aspects directement liés à l'invention.

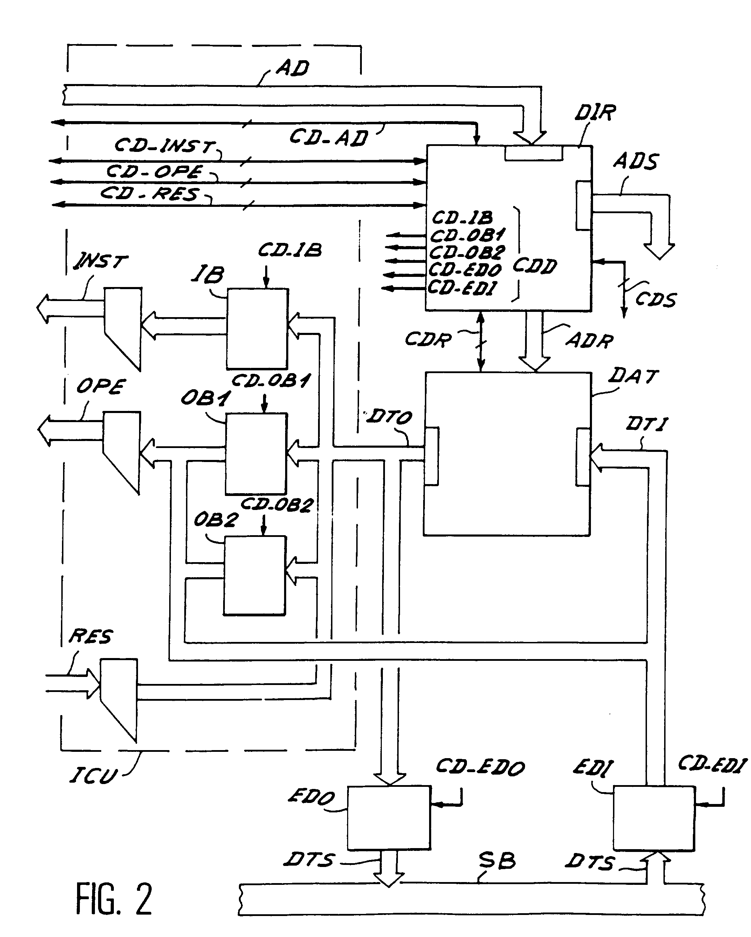

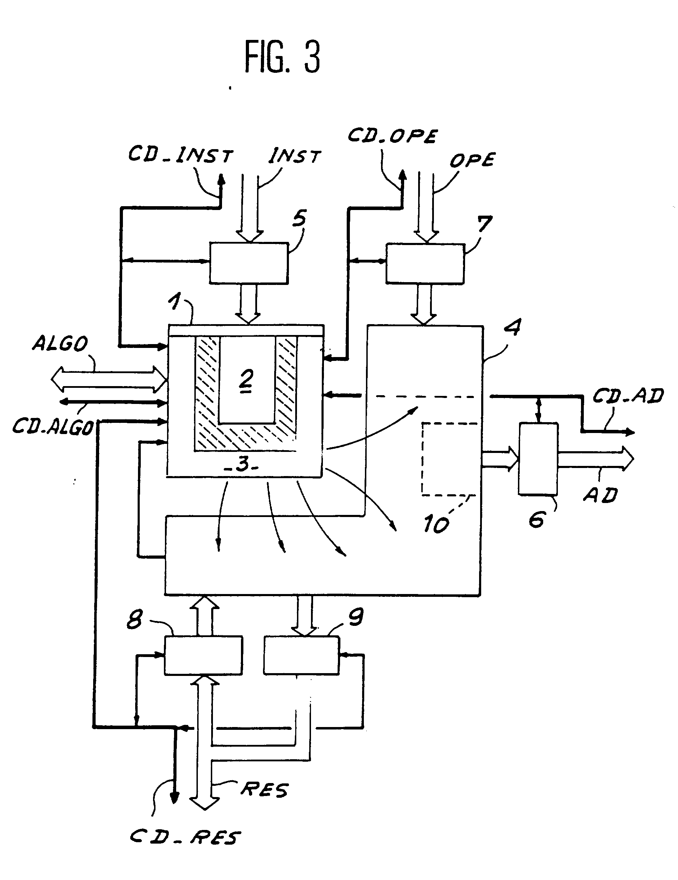

Le mode de réalisation qui va être décrit se concrétise tout d'abord par les interfaces particulières de l'antémémoire et les interfaces correspondantes des unités ainsi que par les liaisons associées. Ces éléments vont être décrits en référence aux figures 2 et 3.

La figure 2 représente l'antémémoire CA où nous retrouvons le contrôleur DIR relié à EAD par les lignes AD et CD-AD ainsi que les circuits mémoire DAT. L'antémémoire CA communique avec les trois unités d'exécution par l'intermédiaire d'un ensemble de circuits d'interface ICU créant trois bus INST, OPE, RES auxquels sont reliées les trois unités d'exécution et les lignes de contrôle associées, respectivement, CD-INST, CD-OPE, CD-RES.

Le bus INST est affecté au transfert d'instructions entre la mémoire DAT et les unités. La sortie DTO de la mémoire DAT est reliée au bus INST par l'intermédiaire d'un tampon d'instructions IB et d'un circuit de décadrage.

Les bus OPE et RES sont affectés respectivement aux transferts des opérandes et des résultats. Ces bus sont reliés respectivement à la sortie DTO et à l'entrée DTI de la mémoire DAT par l'intermédiaire de tampons OB 1 et OB 2 et de circuits de décadrage. Les tampons IB, OB 1, OB 2 peuvent être chargés à partir de la mémoire DAT en réponse aux commandes de lecture CDR du contrôleur DIR. Enfin l'entrée DTI et la sortie DTO de la mémoire DAT sont reliées aux lignes de donnée DTS du bus système SB respectivement par un tampon d'entrée EDI et un tampon de sortie EDO.

Les tampons IB, OB 1, OB 2, EDO, EDI sont commandés respectivement par les signaux CD-IB, CD-OB 1, CD- OB 2, CD-EDO et CD-EDI délivrés par le contrôleur DIR. Ces signaux servent à sélectionner en lecture ou en écriture les différents registres de ces tampons lors des transferts de données vers ou à partir de la mémoire DAT, et vers ou à partir des unités d'exécution.

Le fonctionnement de l'antémémoire pour les opérations internes et vis-à-vis du bus système SB est en grande partie classique. On peut toutefois rappeler que les informations d'adresse et les commandes associées fournies par l'unité d'adressage EAD sont prises en compte par le contrôleur DIR pour rechercher dans une mémoire associative interne (appelée répertoire ou "directory") si les données correspondant à l'adresse reçue sont bien présentes dans la mémoire DAT. Si c'est le cas, le contrôleur DIR adresse directement la mémoire DAT et commande les opérations de lecture ou d'écriture. Dans le cas contraire ("MISS") le contrôleur déclenche une opération de lecture dans la mémoire centrale MU au moyen de signaux d'adresse et de commande transmis respectivement par les lignes ADS et CDS du bus SB. Une fois la mise à jour de la mémoire DAT terminée, les échanges de données avec les unités de traitement reprennent normalement.

Il est à noter que ces opérations de mise à jour sont invisibles pour les unités de traitement. Elles se traduisent simplement par la présence d'un signal d'occupation BUSY envoyé par le contrôleur DIR aux unités de traitement.

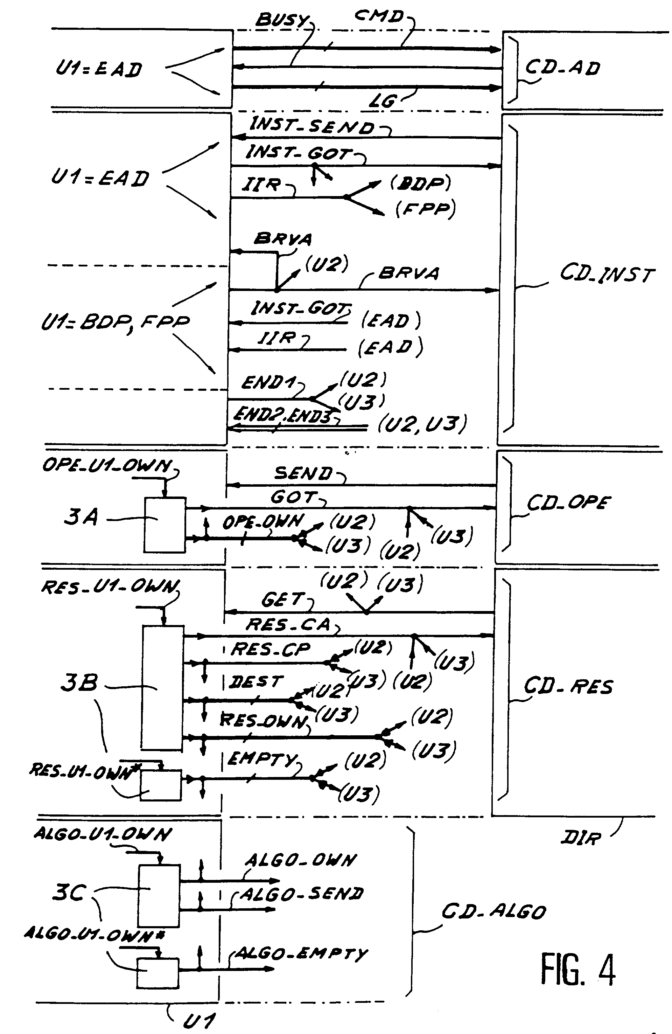

Des aspects particuliers de réalisation liés à l'invention concernent les échanges entre l'antémémoire et les unités de traitement. Des explications à ce sujet seront données en référence à la figure 4 mais auparavant il est utile de décrire l'organisation des unités d'exécution.

La figure 3 représente de façon schématique, les principaux sous-ensembles constituant l'unité d'adressage EAD. Nous retrouvons les liaisons AD, INST, OPE, RES mentionnées précédemment. Ces liaisons sont reliées à l'unité par l'intermédiaire de tampons référencés respectivement 6, 5, 7, 8 et 9 servant à emmagasiner temporairement les adresses, les instructions, les opérandes, les résultats reçus et les résultats à émettre que l'unité échange avec l'antémémoire ou avec les autres unités.

Comme toute unité microprogrammée, elle peut être subdivisée en deux grandes parties : une partie contrôle ou bloc de commande 1 et une partie opérative ou chemin de données 4.

Le bloc de commande 1 comprend une partie d'exécution des microprogrammes 2 associée à une partie câblée 3 qui coopèrent entre elles pour gérer l'exécution des instructions reçues et, d'une façon générale, pour effectuer des opérations "système" spécifiquement confiées au micrologiciel et au matériel.

Le chemin de données 4 est constitué typiquement des opérateurs câblés et des registres, visibles ou non du logiciel, nécessaires à l'exécution des instructions. Ces ressources sont contrôlées au moyen d'une multitude de signaux issus du bloc de commande 1.

Le bloc de commande 1 est d'autre part relié à un bus supplémentaire appelé canal algorithmique ALGO sur lequel sont branchées les autres unités. Ce bus qui est associé à des lignes de commande CD-ALGO fera l'objet d'explications ultérieures.

Les autres unités d'exécution BDP, FPP ont une organisation analogue à l'unité d'adressage représentée à la figure 3. Les unités BDP et FPP se distinguent évidemment de l'unité d'adressage EAD par l'absence de l'interface d'adressage 6 reliée aux lignes AD et CD-AD. D'autre part, seule unité EAD possède dans sa partie opérative les circuits spécifiques 10 de calculs d'adresse réelle. Compte tenu de leurs fonctions différentes, les trois unités contiennent des microprogrammes différents et chacune possède des moyens de décodage des microfonctions spécifiques correspondantes.

Selon l'exemple décrit, l'ensemble des fonctions du processeur est réparti sur les trois unités EAD, BDP, FPP de la façon suivante :
- EAD est affectée au développement d'adresse permettant de calculer les adresses virtuelles en fonction du champ d'adresse des instructions reçues. Elle traduit ces adresses virtuelles en adresses réelles et transmet les commandes et les adresses réelles à l'antémémoire. Ces opérations déclenchent le chargement simultané des instructions par le bus INST dans les trois unités ou bien l'envoi des opérandes sur le bus OPE aux unités qui en ont besoin. De même, EAD participe par sa fonction adressage aux opérations d'écriture en mémoire des résultats élaborés par les autres unités et transmis sur le bus RES. Une autre fonction importante est la gestion des instructions à charger. Pour exécuter ces fonctions, le chemin de données 4 comporte des registres de base BR, des registres généraux GR, des compteurs d'instructions IC et un certain nombre de registres de travail. Il est prévu également un premier additionneur pour calculer l'adresse virtuelle à partir du contenu des registres de base, du contenu d'un des registres généraux et d'une valeur de déplacement fournie par l'instruction en cours d'exécution. Un second additionneur est particulièrement affecté aux mises à jour des compteurs d'instructions. Le chemin de données est enfin muni d'un circuit pour accélérer la traduction des adresses virtuelles en adresses réelles.
- L'unité BDP est une unité de calcul binaire et décimal comportant également des registres généraux et des registres de travail ainsi que certains opérateurs spécialisés tels que additionneur binaire, multiplieur, opérateur booléen, décaleur, additionneur décimal. Ces ressources peuvent servir à effectuer des opérations binaires décimales définies par les instructions à exécuter mais aussi à sous-traiter à la demande de l'unité d'adressage EAD certains calculs auxiliaires, tels que les calculs d'index, pour effectuer l'adressage ou les calculs des conditions de branchement dans le cas d'instructions de branchement conditionnel.
- L'unité FPP est une unité de calcul scientifique permettant les opérations d'addition, soustraction, multiplication, division portant sur des opérandes formatées en virgule flottante. Son chemin de données comporte des registres scientifiques et de travail de grande capacité ainsi que des opérateurs performant affectés aux calculs susmentionnés. Bien entendu, l'unité FPP comporte également des moyens pour transformer la représentation binaire des nombres en représentation flottante et réciproquement. L'unité FPP sera donc en mesure d'exécuter des instructions de type scientifique et on pourra prévoir également qu'elle sous-traite à la demande de l'unité BDP certaines opérations telles que les divisions ou les multiplications complexes.

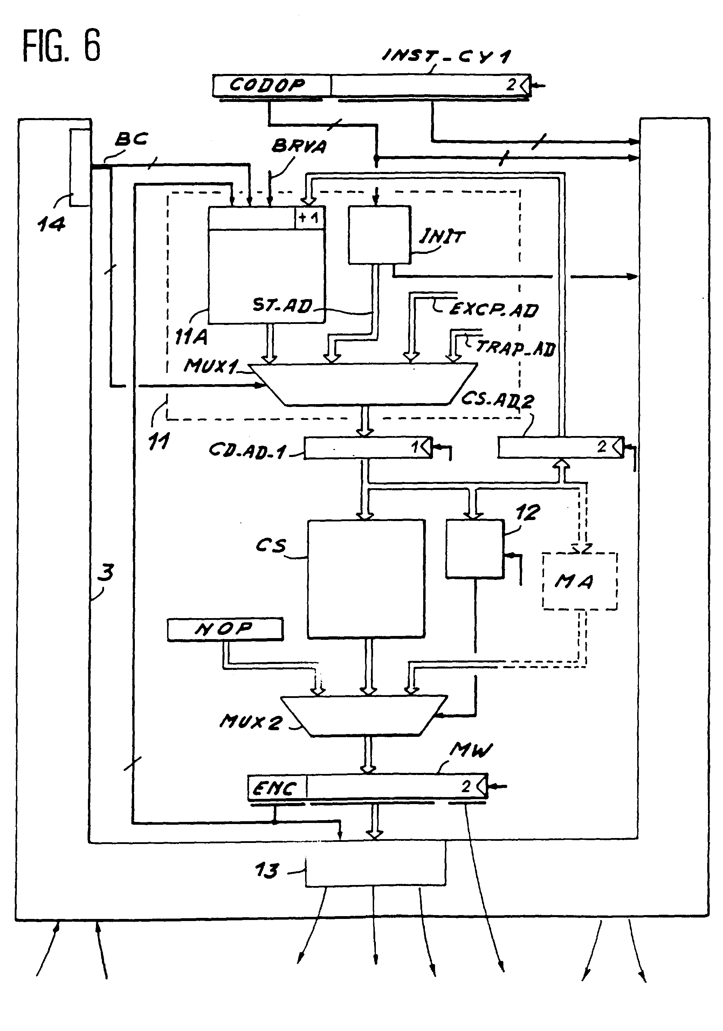

Comme chaque unité est microprogrammée de façon à pouvoir exécuter de façon autonome des microprogrammes spécifiques correspondant aux instructions à exécuter, chaque bloc de commande comporte sa propre mémoire de microprogramme, son propre microséquenceur ainsi qu'un ensemble de circuits logiques associés. Tous ces éléments seront décrits plus en détails à la figure 6.

Cette microprogrammation répartie dans plusieurs unités nécessite des moyens pour synchroniser les microprogrammes qui sont exécutés simultanément dans les trois unités. Cette synchronisation est mise en oeuvre grâce aux lignes de contrôle CD-INST, CD-OPE, CD-RES et CD-ALGO. Les définitions détaillées de ces liaisons et leurs fonctions vont être maintenant décrites en référence à la figure 4.

Nous retrouvons sur la partie droite de la figure les interfaces du contrôleur DIR associées aux lignes CD-AD, CD-INST, CD-OPE et CD-RES. La partie gauche de la figure représente les interfaces correspondantes d'une des unités d'exécution U1 auxquelles s'ajoute l'interface de contrôle CD-ALGO associée au canal algorithmique ALGO. Pour ne pas compliquer la figure, une seule unité U1 est représentée, étant entendu que cette unité peut être EAD, BDP ou FPP. Par convention, les autres unités sont référencées U2 et U3. Etant donné cependant le rôle particulier de l'unité EAD, certaines parties de son interface seront spécifiques de cette unité (U1 = EAD), tandis que d'autres seront spécifiques des autres unités (U1 = BDP/FPP).

Les opérations d'adressage de la mémoire DAT commandées par EAD utilisent les lignes CD-AD qui comportent les lignes de commande CMD permettant à EAD l'envoi de signaux de commande correspondants. Les signaux de commande CMD servent à initialiser certaines opérations ou accès mémoire exécutables par l'antémémoire. L'ensemble des commandes pour ces opérations peut être codé sur plusieurs bits véhiculés par plusieurs lignes de CMD. Comme commandes à prévoir, on peut citer la commande de lecture d'instructions (CIIR) ou d'opérandes (IOR), la commande d'écriture d'opérandes (IOW), des commandes de suspension d'opérations et de reprise d'opérations qui avaient été suspendues. Ces lignes de commande sont associées à des lignes d'indication de longueur LG pour indiquer à l'antémémoire, en complément de l'adresse, le nombre d'octets concernés par une commande de lecture ou d'écriture. D'autres lignes servent à véhiculer des signaux complémentaires, tel qu'un signal de validation d'adresse, un signal de terminaison, ou un signal de validation des commandes (non représentés) ainsi que le signal d'occupation BUSY émis par DIR pour signaler à EAD si l'antémémoire est prête ou non à exécuter des commandes par exemple en cas de rechargement à partir de la mémoire centrale suite à un "MISS".

Parmi les signaux CD-INST, associés au bus intruction INST, certains ne concernent que l'unité d'adressage EAD : INST-SEND émis par DIR pour signaler à EAD que l'antémémoire envoie une instruction, INST-GOT émis par EAD pour signaler à l'antémémoire qu'une instruction envoyée précédemment a été effectivement reçue, IIR pour signaler aux autres unités BDP, FPP qu'une commande de lecture d'instructions CIIR a été envoyée à l'antémémoire. Une ligne de validation de branchement BRVA relie les trois unités et le contrôleur entre eux. Un signal BRVA peut être émis (dans le cas d'une instruction de branchement) par l'une des unités BDP ou FPP pour indiquer aux deux autres unités et au contrôleur DIR si un branchement conditionnel est effectif ou non. Le signal BRVA est utilisé par les unités réceptrices et le contrôleur pour valider les signaux d'initialisation de lecture d'instruction CIIR, IIR émis par l'unité d'adressage EAD. Les trois unités sont enfin reliées entre elles par trois lignes de fin d'exécution d'instruction END 1, END 2, END 3. Par ces lignes, les unités U1, U2, U3 peuvent émettre vers les deux autres unités respectivement les signaux END 1, END 2, END 3 signalant qu'elles sont prêtes à exécuter le dernier cycle de l'instruction en cours. Ces signaux vont servir dans chaque unité à synchroniser l'exécution des instructions.

Les lignes de contrôle CD-OPE associées au bus opérande OPE comportent une ligne de notification d'émission d'opérande SEND permettant au contrôleur DIR de signaler aux trois unités qu'il émet un opérande sur le bus OPE. D'autre part, les trois unités et le contrôleur DIR sont reliés entre eux par une ligne d'accusé de réception GOT qui permet à chaque unité d'envoyer à DIR un signal d'accusé de réception en réponse au signal d'émission SEND. Le signal GOT est émis par l'unité destinataire de l'opérande. Pour assurer la cohérence des transferts, l'unité réceptrice ne peut émettre effectivement le signal GOT que si elle est propriétaire du bus OPE (concrétisée par l'état logique d'une bascule OPE-U1-OWN).

Un bus de transfert de propriété OPE-OWN relie les trois unités entre elles pour permettre à l'unité propriétaire du bus opérande d'indiquer le nouveau propriétaire de ce bus. Lorsqu'un changement de propriétaire doit se produire (situation prévue dans le microprogramme de l'unité propriétaire, en fonction de paramètres d'état), l'unité propriétaire émet sur OPE-OWN des signaux codés en fonction de l'identité de la nouvelle unité propriétaire. Ces signaux sont reçus par les deux autres unités et l'unité réceptrice qui se reconnaît comme étant la nouvelle propriétaire du bus opérande (par décodage de ces signaux) mémorise cette situation (OPE-U1-OWN mis à 1), ce qui l'autorise alors à émettre les signaux d'accusé de réception GOT et les signaux de propriété OPE-OWN. En résumé, les signaux CD-OPE mettent en oeuvre un mécanisme de propriété de réception des opérandes.

Contrairement au bus opérande, le bus résultat RES est géré par un mécanisme de propriété d'émission. La propriété du bus résultat se concrétise dans chaque unité par l'état logique d'une bascule de propriété RES-U1-OWN dont l'état logique autorise ou interdit à l'unité l'émission d'un résultat.

La mise en oeuvre de ce mécanisme utilise les lignes de contrôle CD-RES définies de la façon suivante. Une ligne de disponibilité GET de l'antémémoire relie le contrôleur DIR aux trois unités et lui sert à émettre un signal de disponibilité signifiant que l'un au moins de ses tampons OB 1 ou OB 2 sont vides. De façon analogue, des liaisons EMPTY relient les trois unités entre elles pour permettre aux unités qui ne sont pas propriétaires du bus résultat (RES-U1-OWN = 0) d'informer les autres unités et en particulier l'unité propriétaire du bus résultat qu'elles sont prêtes à recevoir un résultat, c'est-à-dire que leur tampon d'entrée des résultats 8 (figure 3) est vide. Une ligne de type bus RES-CA de notification d'émission de résultat relie les trois unités et le contrôleur DIR entre eux. La ligne RES-CA permet au propriétaire du bus résultat d'envoyer un signal d'émission de résultat pour informer le contrôleur DIR qu'un résultat destiné à l'antémémoire est émis. Les trois unités sont d'autre part reliées entre elles par une autre ligne de type bus RES-CP de notification d'émission de résultat d'une unité vers une autre unité. Cette ligne RES-CP est associée à un bus de destinataire DEST reliant également les trois unités entre elles. Le bus DEST permet de véhiculer un signal codé permettant d'identifier le destinataire du résultat dont l'envoi est signalé par RES-CP. L'envoi de signaux sur les lignes RES-CA, RES-CP, DEST est conditionné par l'état de la bascule de propriété RES-U1-OWN. L'état RES-U1-OWN conditionne également l'envoi de signaux de changement de propriété sur un bus de transfert de propriété RES-OWN du bus résultat. Le bus RES-OWN relie les trois unités entre elles et est utilisé de façon analogue au bus OPE-OWN décrit précédemment.

Le canal algorithmique ALGO est utilisé pour les échanges d'informations de branchements des microprogrammes. Ce canal trouve son utilité du fait que des microinstructions de branchement sont utilisés dans les microprogrammes des unités alors que les conditions de branchement sont déterminées par une seule de ces unités. Il est donc nécessaire que l'unité qui détermine le branchement effectif en informe les autres unités, ce qui peut être réalisé au moyen de ce canal spécifique.

Le mécanisme de propriété d'émission est également utilisé pour le canal algorithmique ALGO. Le propriétaire du canal ALGO (ALGO-U1-OWN = 1) est autorisé à émettre des signaux de branchement du microprogramme et la présence d'un tel envoi est signalé par un signal d'émission de condition de branchement sur les lignes ALGO-SEND reliant entre elles les unités susceptibles d'utiliser ces informations. Cet envoi est conditionné par un signal de disponibilité du destinataire émis sur les lignes ALGO-EMPTY. Bien entendu, seules les unités non propriétaires (ALGO-U1-OWN = 0) du canal algorithmique sont autorisées à émettre ce signal de disponibilité. Enfin, comme pour le bus opérande et le bus résultat, la propriété du canal algorithmique peut être modifiée par son propriétaire (ALGO-U1-OWN = 1) par les lignes de transfert de propriété ALGO-OWN reliant les unités entre elles. Dans le cas simplifié où seules les unités EAD et BDP ont besoin d'échanger ces informations, ALGO-SEND, ALGO-OWN et ALGO-EMPTY sont constitués chacuns par une seule ligne.

Grâce aux signaux précédemment décrits que les unités et l'antémémoire peuvent s'échanger, chaque unité est en mesure de gérer de façon autonome l'exécution des instructions reçues. Bien entendu, les microprogrammes chargés dans les différentes unités doivent être conçues en tenant compte de ces mécanismes. D'autre part, il faut prévoir dans la partie câblée 3 du bloc de commande, des circuits de synchronisation capables d'intervenir dans l'exécution du microprogramme en fonction de ces signaux.

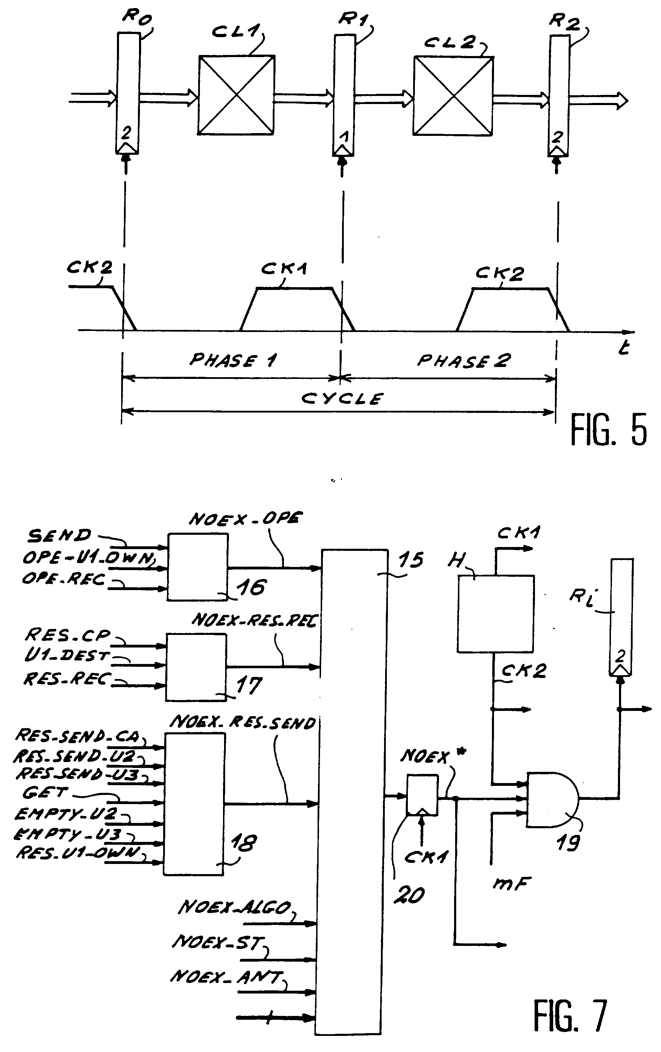

Avant de décrire les circuits de synchronisation, il convient de rappeler à l'aide des figures 5 et 6 les éléments essentiels de la partie microprogrammée du bloc de commande.

La figure 5 représente de façon schématique le principe de séquencement des opérations de l'ensemble du processeur et en particulier du bloc de commande de chaque unité. Ce séquencement est réalisé au moyen de signaux d'horloge CK1 et CK2 définissant deux phases successives PHASE 1 et PHASE 2, un cycle étant défini comme la succession d'une phase 1 et d'une phase 2. Comme cela apparaît sur la figure 5, les circuits d'une unité peuvent être représentés fonctionnellement comme un montage en cascade de registres R0, R1, R2 et de circuits logiques ou combinatoires de type CL1 ou CL2 évalués respectivement en phase 1 ou en phase 2. Les sorties d'un circuit logique de type CL1 sont reliées aux l'entrées d'un circuit logique aval de type CL2 par l'intermédiaire d'un registre synchronisé par le signal d'horloge CK1 correspondant à la phase 1 active. De même, les sorties d'un circuit de type CL2 sont reliées aux entrées d'un autre circuit aval de type CL1 (non représenté) par l'intermédiaire d'un registre R2 synchronisé par CK2. Ainsi, pour la partie de circuit représentée à titre d'illustration, le circuit CL1 est actif pendant la phase 1 en fonction des signaux d'entrée contenus dans le registre R0 chargé pendant la phase 2 précédente. Le circuit aval CL2 est actif pendant la phase 2 suivante en fonction du contenu du registre R1 chargé pendant la phase 1 précédente et son résultat est chargé dans le registre R2 synchronisé par le signal d'horloge CK2.

La partie microprogrammée de la figure 6 est constituée essentiellement d'un microséquenceur 11 dont la sortie est reliée à l'entrée du registre d'adresse de microinstruction CS-AD-1 synchronisé par CK1. La sortie de ce registre est reliée à l'entrée d'une mémoire de microprogramme CS. Le registre CS-AD-1 est également relié à l'entrée d'un registre CS-AD-2 synchronisé par CK2. Ce registre sert à contenir l'adresse de la microinstruction en cours d'exécution. La sortie de la mémoire CS est reliée par l'intermédiaire d'un multiplexeur MUX2 à l'entrée d'un registre MW synchronisé par CK2 et servant à contenir le mot de microprogramme (ou microinstruction) fourni normalement par la mémoire CS. La sortie du registre MW est reliée à la partie câblée 3 du bloc de commande et en particulier au décodeur 13. Le champ d'enchaînement ENC du registre MW contient sous forme codée la microfonction d'enchaînement associée à chaque microinstruction. Les lignes de sortie du registre MW qui correspondent au champ d'enchaînement ENC sont reliées au circuit 11A du microséquenseur 11 pour le calcul d'adresse de la microinstruction suivante. Le circuit 11A est aussi relié en entrée à la sortie du registre CS-AD-2. Enfin, le circuit 11A reçoit du sous-ensemble 14 de la partie câblée 3 des signaux BC représentatifs des conditions de branchement du microprogramme, notamment les signaux issus du bus ALGO. Ces conditions sont évaluées en phase 2 en fonction de paramètres internes et externes. Le circuit 11A reçoit également le signal de validation de branchement BRVA provenant d'une autre unité.

Un registre d'instruction courante INST-CY1 synchronisé par CK2 contient l'instruction en cours d'exécution. Sa sortie est reliée à la partie câblée 3 et à l'entrée d'un circuit d'initialisation INIT, généralement réalisé au moyen d'une mémoire morte. Le circuit INIT fournit, en fonction du code opératoire CODOP de l'instruction, l'adresse de la première microinstruction du microprogramme d'exécution de l'instruction.

Un multiplexeur MUX1 à plusieurs entrées constitue l'étage de sortie du microséquenseur 11. Une première entrée est reliée à la sortie du circuit 11A et une seconde entrée est reliée à la sortie du circuit INIT. Le multiplexeur MUX1 reçoit également en entrée des signaux d'adresses particulières de microprogramme tels que EXCP-AD ou TRAP-AD permettant des déroutements du microprogramme en cas d'exceptions (EXCP) ou d'évènements spéciaux (TRAP). Sous la commande de signaux de branchement évalués en phase 2 par la partie câblée 3, le multiplexeur MUX1 sélectionne au cours de la phase 1 suivante, l'adresse de la microinstruction à exécuter. Il peut s'agir de la première microinstruction de l'instruction, d'une microinstruction de déroutement ou de la microinstruction définie par le circuit 11A lors du déroulement normal du microprogramme.

La sortie du registre d'adresse de microinstruction CS-AD-1 peut également être reliée à une mémoire externe auxiliaire MA servant à étendre la capacité de la mémoire de microprogramme CS. Dans ce cas, l'adresse de microprogramme est appliquée à un circuit 12 permettant de détecter si la microinstruction correspondante est contenue ou non dans la mémoire interne CS. D'autre part, la sortie de la mémoire auxiliaire MA est appliquée à une des entrées du multiplexeur MUX2. Ce multiplexeur MUX2 est commandé par le circuit 12 de façon à sélectionner la sortie de la mémoire interne CS ou celle de la mémoire auxiliaire MA. La mémoire auxiliaire MA peut être une mémoire supplémentaire associée à l'unité ou éventuellement la mémoire centrale du système dont une zone est réservée aux microprogrammes.

Une autre entrée du multiplexeur MUX2 peut recevoir une microinstruction câblée NOP dont l'exécution ne modifie pas l'état logique de l'unité. L'instruction NOP est activée lorsqu'il faut maintenir l'unité en attente, par exemple dans le cas où l'accès à la mémoire auxiliaire nécessite un nombre de cycles supérieur à celui pour accéder à la mémoire interne.

La microinstruction contenue dans le registre MW fournit des signaux au reste de l'unité par l'intermédiaire d'un décodeur de microinstruction 13 de façon à piloter l'ensemble des ressources de cette unité et à produire les signaux échangés avec l'extérieur. C'est au niveau de ce décodage que sont notamment produits les signaux d'attribution et de changement de propriété qui ont été prévus par microprogrammation.

En particulier, la première microinstruction d'exécution d'une instruction détermine de cette façon chacunes des unités propriétaires des bus OPE, RES et ALGO.

Le bloc de commande de la figure 6 étant en grande partie de type classique, son fonctionnement est bien connu de l'homme du métier. Il est donc inutile de développer tous les détails de son fonctionnement. Nous pouvons toutefois rappeler que toute nouvelle instruction chargée en phase 2 dans le registre d'instruction INST-CY1 est décodée par le circuit d'initialisation INIT qui fournit en phase 1 suivante l'adresse de la première microinstruction. En fonction de cette adresse, la mémoire du microprogramme CS fournit en phase 2 suivante la première microinstruction MW d'où sont dérivés les signaux de commande des ressources de l'unité. Pendant cette même phase 2, l'adresse de cette microinstruction est chargée dans le registre CS-AD-2 pour permettre à l'unité 11A de calculer l'adresse de la microinstruction suivante en fonction des signaux de branchement BC élaborés pendant cette phase.

Du point de vue séquencement, on peut remarquer que le calcul de l'adresse d'une microinstruction est effectuée en phase 1 correspondant à une phase "lecture" tandis que l'accès à la microinstruction dans la mémoire CS a lieu en phase 2 correspondant à une phase "exécution". Durant cette même phase "exécution", le registre CS-AD-2 se charge avec l'adresse contenue dans le registre CS-AD-1 pour préparer le microséquenceur au calcul de l'adresse de la microinstruction suivante. Il en résulte que si le signal d'horloge CK2 d'exécution de la phase 2 est inhibé, tous les signaux fournis au microséquenceur conservent leur état logique car les registres synchronisés par CK2 ne sont pas modifiés.

La remarque qui précède va maintenant nous permettre d'exposer les moyens pouvant être mis en oeuvre pour réaliser la synchronisation des microprogrammes. Pour cela nous allons considérer la figure 7 qui représente le circuit réalisant cette synchronisation.

Sur cette figure est représenté un des registres Rᵢ synchronisé par CK2. Ce registre est commnandé par une porte ET 19 à trois entrées recevant le signal d'horloge CK2, un signal de microcommande mf engendré par le décodeur 13 en fonction de la microinstruction MW. La troisième entrée de la porte ET 19 reçoit un signal (NOEX^{*}) issu d'une bascule 20. Cette bascule 20 est chargée en phase 1 par un signal fourni par un ensemble de circuits logiques 15, 16, 17, 18.

Les signaux d'entrée des circuits 16, 17, 18 qui ont déjà été introduits au cours de la description de la figure 4 ne vont pas être expliqués à nouveau. Il convient cependant de remarquer qu'ils doivent être évalués en phase 1 d'un cycle.

Les signaux OPE-REC, RES-REC, RES-SEND obtenus par décodage de la microinstruction en cours d'exécution prennent la valeur 1 logique lorsque, respectivement, l'unité attend un opérande (OPE-REC), l'unité attend un résultat (RES-REC), l'unité veut émettre un résultat (RES-SEND).

Le circuit logique 15 réalise la fonction NON-OU ("NOR") et reçoit en entrée une pluralité de signaux qui définissent chacun une condition de non-exécution de la microinstruction en cours. En particulier, il reçoit les signaux de sortie des circuits 16, 17 et 18 qui vont maintenant être décrits.

Le signal NOEX-OPE fourni par le circuit logique 16 correspond à la condition de non exécution se produisant dans le cas où l'unité attend un opérande (OPE-REC = 1) alors que l'antémémoire ne signale pas l'envoi d'un opérande (SEND = 0), ou bien alors que l'unité n'est pas propriétaire du bus opérande (OPE-U1-OWN = 0), ce qui se résume par l'équation logique suivante :

NOEX-OPE =(OPE-REC).[SEND*+(OPE-U1-OWN)*],

où le symbole * signifie qu'il s'agit du complément de la variable logique (avec la convention de logique positive).

Un signal NOEX-RES-REC fourni par le circuit logique 17 correspond à la condition de non exécution qui est imposée dans le cas où l'unité U1 attend un résultat (RES-REC = 1) alors que l'envoi de ce résultat par une autre unité n'est pas signalé (RES-CP = 0) ou alors que l'unité ne se reconnaît pas destinataire du résultat envoyé (U1-DEST = 0). L'équation logique correspondante sera :

NOEX-RES-REC = (RES-REC).[(RES-CP)* + (U1-DEST)*].

le signal NOEX-RES-SEND fourni par le circuit logique 18 correspond aux cas de non-exécution suivants :
1) l'unité U1 doit envoyer un résultat à l'antémémoire ou à une autre unité (RES-SEND-CA ou RES-SEND-U2 ou RES-SEND-U3 = 1) alors que l'unité U1 n'est pas propriétaire du bus résultat (RES-U1-OWN = 0),
2) l'unité U1 doit émettre un résultat à l'antémémoire (RES-SEND-CA = 1) alors que l'antémémoire n'est pas prête à recevoir le résultat (GET = 0),
3) l'unité U1 doit émettre un résultat vers l'une des autres unités U2 ou U3 (RES-SEND-U2 ou RES-SEND-U3 = 1) alors que l'unité destinataire n'est pas prête à recevoir le résultat (EMPTY-U2 ou EMPTY-U3 = 0). Ces conditions se résument pas l'équation logique suivante :

   NOEX-RES-SEND = (RES-SEND-CA + RES-SEND-U2 + RES-SEND-U3).(RES-U1-OWN)* + (RES-SEND-CA).GET* + (RES-SEND-U2).(EMPTY-U2)* + (RES-SEND-U3).(EMPTY-U3)*

Le signal NOEX-ALGO correspond de façon analogue aux conditions de non exécution provoquées par l'impossibilité pour l'unité U1 d'émettre une information de branchement qu'elle doit émettre ou de recevoir une information de branchement attendue. En fonction des signaux définis à la figure 4, nous avons l'équation suivante :

NOEX-ALGO = (ALGO-SEND).[(ALGO-OWN)* + ALGO-EMPTY] + (ALGO-REC ).(ALGO-SEND)*

où ALGO-REC est un signal interne à l'unité qui prend la valeur 1 logique lorsque l'unité U1 attend une information de branchement.

Le circuit 15 peut recevoir d'autres signaux de non-exécution tels que NOEX-ST correspondant au cas d'impossibilité de démarrer l'exécution de l'instruction suivante ou NOEX-ANT (spécifique pour l'unité d'adressage EAD) interdisant à cette unité d'exécuter l'instruction suivante en mode anticipée. D'autres signaux de non-exécution que l'on peut prévoir sortiraient du cadre de la présente invention et ne seront donc pas évoqués ici.

Nous allons maintenant décrire le fonctionnement d'une unité lorsque le mécanisme de synchronisation selon l'invention intervient. Pour cela nous nous reportons à la figure 6 en supposant que la phase 2 d'un cycle d'exécution vient de se terminer. L'état logique de l'unité est alors le suivant : les registres actifs en phase 2 CS-AD-2 et MW viennent d'être chargés avec de nouvelles valeurs tandis que le registre CS-AD-1 conserve la valeur qui avait été chargée durant la phase 1 précédente. En dehors du cas où une nouvelle instruction doit s'exécuter (microfonction START-INST), le registre INST-CY1 conserve la même valeur.

Au début de la phase 1 suivante, la microinstruction MW est décodée par le décodeur 13 qui fournit en sortie un ensemble de signaux de microfonctions permettant d'activer durant cette phase ou durant la phase 2 suivante les opérateurs et les registres en fonction de la microinstruction reçue. Le signal mf appliqué en phase 2 à l'entrée de la porte 19 de la figure 7 représente, à titre d'illustration, un de ces signaux. Durant cette même phase 1, l'unité reçoit des autres unités et de l'antémémoire des signaux d'interface et en particulier ceux devant être pris en compte par le circuit de la figure 7 pour la synchronisation.

Lors de l'apparition du signal d'horloge CK1, les registres synchronisés par ce signal peuvent se charger avec leur nouvelle valeur, dans la mesure où ils sont impliqués dans l'une des microfonctions de la microinstruction. Au même instant, la bascule 20 est chargée par la valeur logique présente en sortie du circuit 15.

En l'absence d'une condition de non exécution (NOEX* = 1), la bascule 20 prend alors l'état logique 1, ce qui a pour conséquence d'autoriser la mise à jour éventuelle des registres actifs en phase 2 lors de l'apparition du signal d'horloge suivant CK2. Dans le cas contraire, la bascule 20 est à 0 et tous les registres synchronisés par CK2 sont gelés.

Cette situation persiste aussi longtemps qu'au moins une des conditions de non-exécution est présente. Si lors d'une phase 1 d'évaluation ultérieure la bascule est forcée à la valeur logique 1, signalant ainsi que toutes les conditions d'exécution sont satisfaites, l'ensemble des registres synchronisés par CK2 seront à nouveau autorisés à être modifiés durant la phase 2 suivante. Il en résulte que la phase 2 d'exécution de la microinstruction qui avait été interrompue peut s'exécuter et simultanément, la nouvelle microinstruction est chargée dans le registre MW.

Bien entendu, le mode de réalisation qui vient d'être décrit pourrait faire l'objet de multiples variantes par l'emploi de moyens équivalents.

## Revendications

1. Processeur pour système de traitement de données comprenant une pluralité d'unités de traitement microprogrammées se répartissant l'ensemble des fonctions dudit processeur, chaque unité étant affectée à l'exécution d'un sous-ensemble de fonctions dudit processeur, lesdites unités étant reliées à des moyens de mémorisation (CA) contenant les instructions des programmes à exécuter et les opérandes, l'une au moins desdites unités étant une unité d'adressage (EAD) desdits moyens de mémorisation (CA) pour l'obtention des instructions et des opérandes, lesdites unités (U1, U2, U3) comportant chacune leur propre bloc de commande (1) pour décoder les instructions fournies par les moyens de mémorisation (CA) et exécuter de façon autonome les fonctions définies par lesdites instructions, ledit processeur étant caractérisé en ce qu'une instruction est subdivisée en plusieurs étapes successives chacune confiée à une unité de traitement particulière, en ce que chaque unité comporte des moyens de synchronisation (15, 16, 17, 18, 19) pour autoriser ou interrompre l'exécution du microprogramme défini par l'instruction en cours dans ladite unité et en ce que lesdits moyens de synchronisation interrompent (NOEX) ladite exécution tant que :
- soit un opérande contenu dans lesdits moyens de mémorisation (CA) et nécessaire à ladite exécution n'est pas effectivement reçu par ladite unité,
- soit un résultat attendu par ladite unité et calculé par une autre unité n'est pas effectivement reçu par ladite unité,
- soit un résultat calculé dans ladite unité ne peut pas être effectivement transmis à l'unité ou aux moyens de mémorisation destinataire dudit résultat.

2. Processeur selon la revendication 1, caractérisé en ce que lesdits moyens de mémorisation (CA) comportent des moyens d'interface (ICU) reliés à un premier bus (OPE), appelé bus opérande, et à un deuxième bus (RES), appelé bus résultat, lesdits premier et second bus servant respectivement à la lecture des opérandes et à l'écriture des résultats dans lesdits moyens de mémorisation (CA), en ce que chaque unité (EAD, BDP, FPP) est reliée respectivement par une première et une seconde interface auxdits bus opérande (OPE) et bus résultat (RES), en ce que chaque unité (U1, U2, U3) comprend des moyens (3) pour recevoir et détecter un premier indicateur de propriété (OPE-OWN) associé au bus opérande (OPE) et des moyens (3A) pour émettre vers les autres unités ledit premier indicateur de propriété (OPE-OWN), en ce que chaque unité comprend des moyens (3) pour recevoir et détecter un second indicateur de propriété (RES-OWN) associé au bus résultat (RES) et des moyens (3B) pour émettre vers les autres unités ledit second indicateur de propriété (RES-OWN), en ce que lesdites unités sont reliées entre elles par des premières et secondes liaisons de contrôle (CD-OPE, CD-RES) permettant respectivement la transmission desdits premier et second indicateurs, en ce qu'une des conditions de réception effective d'un opérande par une unité est la détection par ladite unité dudit premier indicateur (OPE-OWN) et en ce qu'une des conditions d'émission effective d'un résultat par une unité est la détection par ladite unité dudit second indicateur (RES-OWN).

3. Processeur selon la revendication 2, caractérisé en ce que lesdits moyens de mémorisation (CA) sont reliés auxdites unités par des liaisons de notification d'émission d'opérande associées au bus opérande (OPE) et comprend des moyens pour transmettre sur ces liaisons des signaux d'émission d'opérande (SEND) lorsque lesdits moyens de mémorisation émettent un opérande, en ce que chaque unité comprend des moyens (3) pour recevoir et détecter lesdits signaux d'émission d'opérande (SEND) et en ce qu'une autre condition de réception effective d'un opérande par une unité est la détection par ladite unité d'un signal d'émission (SEND) attendu.

4. Processeur selon la revendication 3, caractérisé en ce que lesdites unités sont reliées auxdits moyens de mémorisation (CA) par des liaisons d'accusé de réception associées au bus opérande (OPE) et en ce que chaque unité comprend des moyens (3) pour émettre sur lesdites liaisons d'accusé de réception un signal d'accusé de réception (GOT) lorsqu'un opérande est effectivement reçu par ladite unité de façon à en informer lesdits moyens de mémorisation (CA).

5. Processeur selon l'une des revendications 2 à 4, caractérisé en ce que lesdits moyens de mémorisation (CA) et lesdites unités sont reliés entre eux par des liaisons de disponibilité associées au bus résultat (RES) et comprennent chacun des moyens pour échanger sur ces liaisons des signaux de disponibilité (GET, EMPTY) et en ce qu'une autre condition d'émission effective d'un résultat par une unité est la détection par ladite unité d'un signal de disponibilité (GET, EMPTY) émis par le destinataire du résultat.

6. Processeur selon l'une des revendications 2 à 5, caractérisé en ce que lesdites unités sont reliées entre elles par des liaisons de notification d'émission de résultat associées au bus résultat (RES), lesdites unités comprenant des moyens pour échanger sur ces liaisons des signaux d'émission de résultat (RES-CP) et des signaux de destinataire (DEST), en ce que lesdits signaux d'émission de résultat (RES-CP) et lesdits signaux de destinataire (DEST) sont envoyés par l'unité propriétaire du bus résultat (RES) lorsque ladite unité propriétaire envoie des données sur le bus résultat (RES) à l'unité identifiée par lesdits signaux de destinataire (DEST) et en ce que la condition de réception effective d'un résultat par une unité est la détection d'un signal d'émission de résultat (RES-CP) et la coïncidence desdits signaux de destinataire (DEST) avec l'identité de ladite unité.

7. Processeur selon l'une des revendications 2 à 6, caractérisé en ce que les propriétés respectives (OPE-OWN, RES-OWN) du bus opérande (OPE) et du bus résultat (RES) en début d'exécution du microprogramme de l'instruction en cours sont déterminées par le bloc de commande de chaque unité en fonction du code opératoire de ladite instruction et en ce que lesdites propriétés peuvent être modifiées en cours d'exécution dudit microprogramme par les unités propriétaires desdits bus (OPE, RES).

8. Processeur selon l'une des revendications 2 à 7, caractérisé en ce que chaque unité comporte des moyens (15, 19) pour suspendre l'exécution du microprogramme en cours dans ladite unité lors de la détection d'une micro instruction de branchement conditionnel dont le calcul n'est pas effectué par ladite unité, en ce que lesdites unités sont reliées entre elles par une liaison algorithmique (ALGO) permettant à l'unité qui calcule la condition de branchement de transmettre le résultat dudit calcul aux autres unités, autorisant ainsi la poursuite des microprogrammes suspendus dans lesdites autres unités.

9. Processeur selon l'une des revendications 2 à 8, caractérisé en ce que lesdits moyens de mémorisation (CA) sont constitués par une antémémoire et en ce que lesdits moyens d'interface (ICU) de ladite antémémoire comprennent au moins deux tampons (OB1, OB2) indépendants reliés en entrée au bus résultat (RES) et à l'antémémoire et reliés en sortie au bus opérande (OPE) et à l'antémémoire.

10. Processeur selon l'une des revendication 1 à 9, caractérisé en ce que lesdites unités sont, outre l'unité d'adressage (EAD), une unité de calcul binaire et décimale (BDP) et une unité de calcul en virgule flottante (FPP).

## Patentansprüche

1. Prozessor für Datenverarbeitungssystem, mit mehreren mikroprogrammierten Verarbeitungseinheiten, die sich sämtliche Funktionen des Prozessors untereinander aufteilen, wobei jede Einheit der Ausführung einer Untergruppe von Funktionen des Prozessors zugeordnet ist, wobei die Einheiten mit Speichermitteln (CA) verbunden sind, die die Befehle der auszuführenden Programme und die Operanden enthalten, wobei wenigstens eine der Einheiten eine Adressierungseinheit (EAD) der Speichermittel (CA) für die Erhaltung der Befehle und der Operanden ist, wobei die Einheiten (U1, U2, U3) jeweils ihren eigenen Steuerblock (1) zum Decodieren der von den Speichermitteln (CA) gelieferten Befehle und zum selbständigen Ausführen der durch die Befehle definierten Funktionen enthalten, wobei der Prozessor dadurch gekennzeichnet ist, daß ein Befehl in mehrere aufeinanderfolgende Stufen unterteilt ist, wovon jede einer besonderen Verarbeitungseinheit übertragen ist, daß jede Einheit Synchronisationsmittel (15, 16, 17, 18, 19) enthält, um die Ausführung des in der Einheit gerade ausgeführten Mikroprogramms zuzulassen oder zu unterbrechen, und daß die Synchronisationsmittel die Ausführung unterbrechen (NOEX), solange:
- entweder ein Operand, der in den Speichermitteln (CA) enthalten ist und für diese Ausführung notwendig ist, nicht tatsächlich von dieser Einheit empfangen worden ist,
- oder ein von dieser Einheit erwartetes und durch eine andere Einheit berechnetes Ergebnis von dieser Einheit nicht tatsächlich empfangen worden ist,
- oder ein in dieser Einheit berechnetes Ergebnis nicht tatsächlich an die Ergebnisempfänger-Einheit oder Ergebnisempfänger-Speichermittel übertragen werden kann.

2. Prozessor nach Anspruch 1, dadurch gekennzeichnet, daß die Speichermittel (CA) Schnittstellenmittel (ICU) enthalten, die mit einem ersten Bus (OPE), der Operandenbus genannt wird, und mit einem zweiten Bus (RES), der Ergebnisbus genannt wird, verbunden sind, wobei der erste und der zweite Bus dem Lesen der Operanden bzw. dem Schreiben der Ergebnisse in den Speichermitteln (CA) dienen, daß jede Einheit (EAD, BDP, FPP) über eine erste bzw. eine zweite Schnittstelle mit dem Operandenbus (OPE) bzw. mit dem Ergebnisbus (RES) verbunden ist, daß jede Einheit (U1, U2, U3) Mittel (3) zum Empfangen und Erfassen eines ersten Eigentumsanzeigers (OPE-OWN), der dem Operandenbus (OPE) zugeordnet ist, und Mittel (3A) zum Senden des ersten Eigentumsanzeigers (OPE-OWN) an die anderen Einheiten enthält, daß jede Einheit Mittel (3) zum Empfangen und Erfassen eines zweiten Eigentumsanzeigers (RES-OWN), der dem Ergebnisbus (RES) zugeordnet ist, und Mittel (3B) zum Senden des zweiten Eigentumsanzeigers (RES-OWN) an die anderen Einheiten enthält, daß die Einheiten miteinander über erste und zweite Steuerverbindungen (CD-OPE, CD-RES) verbunden sind, die die Übertragung der ersten bzw. zweiten Anzeiger ermöglichen, daß eine der Bedingungen für den tatsächlichen Empfang eines Operanden durch eine Einheit die Erfassung des ersten Anzeigers (OPE-OWN) durch diese Einheit ist und daß eine der Bedingungen zum tatsächlichen Senden eines Ergebnisses durch eine Einheit die Erfassung des zweiten Anzeigers (RES-OWN) durch diese Einheit ist.

3. Prozessor nach Anspruch 2, dadurch gekennzeichnet, daß die Speichermittel (CA) mit den Einheiten durch Operandensende-Meldeverbindungen verbunden sind, die zum Operandenbus (OPE) gehören und Mittel enthalten, um auf diesen Verbindungen Operandensendesignale (SEND) zu übertragen, wenn die Speichermittel einen Operanden aussenden, daß jede Einheit Mittel (3) zum Empfangen und Erfassen der Operandensendesignale (SEND) enthält und daß eine andere Bedingung für den tatsächlichen Empfang eines Operanden durch eine Einheit die Erfassung eines erwarteten Sendesignals (SEND) durch diese Einheit ist.

4. Prozessor nach Anspruch 3, dadurch gekennzeichnet, daß die Einheiten mit den Speichermitteln (CA) über Empfangsbestätigungsverbindungen, die zum Operandenbus (OPE) gehören, verbunden sind und daß jede Einheit Mittel (3) enthält, um auf den Empfangsbestätigungsverbindungen ein Empfangsbestätigungssignal (GOT) zu senden, wenn ein Operand durch die Einheit tatsächlich empfangen wird, um die Speichermittel (CA) hierüber zu informieren.

5. Prozessor nach einem der Ansprüche 2 bis 4, dadurch gekennzeichnet, daß die Speichermittel (CA) und die Einheiten untereinander über Verfügbarkeitsverbindungen verbunden sind, die zum Ergebnisbus (RES) gehören und jeweils Mittel enthalten, um auf diesen Verbindungen Verfügbarkeitssignale (GET, EMPTY) auszutauschen, und daß eine andere Bedingung zum tatsächlichen Senden eines Ergebnisses durch eine Einheit die Erfassung eines vom Ergebnisempfänger ausgesendeten Verfügbarkeitssignals (GET, EMPTY) durch diese Einheit ist.

6. Prozessor nach einem der Ansprüche 2 bis 5, dadurch gekennzeichnet, daß die Einheiten untereinander über Ergebnissende-Meldeverbindungen verbunden sind, die zum Ergebnisbus (RES) gehören, wobei die Einheiten Mittel zum Austauschen von Sendeergebnissen (RES-CP) und von Empfängersignalen (DEST) auf diesen Verbindungen enthalten, daß die Ergebnissendesignale (RES-CP) und die Empfängersignale (DEST) von der Einheit geschickt werden, die Eigentümer des Ergebnisbusses (RES) ist, wenn diese Eigentümereinheit auf dem Ergebnisbus (RES) Daten zu der durch die Empfängersignale (DEST) identifizierten Einheit schickt, und daß die Bedingung für den tatsächlichen Empfang eines Ergebnisses durch die Einheit die Erfassung eines Ergebnissendesignals (RES-CP) und die Übereinstimmung der Empfängersignale (DEST) mit der Identität der Einheit ist.

7. Prozessor nach einem der Ansprüche 2 bis 6, dadurch gekennzeichnet, daß die jeweiligen Eigentümer (OPE-OWN, RES-OWN) des Operandenbusses (OPE) und des Ergebnisbusses (RES) am Beginn der Ausführung des Mikroprogramms des gerade ausgeführten Befehls durch den Steuerblock jeder Einheit in Abhängigkeit vom Funktionscode des Befehls bestimmt werden und daß die Eigentümer während der Ausführung des Mikroprogramms durch die Einheiten, die Eigentümer der Busse (OPE, RES) sind, abgewandelt werden können.

8. Prozessor nach einem der Ansprüche 2 bis 7, dadurch gekennzeichnet, daß jede Einheit Mittel (15, 19) enthält, um die Ausführung des in der Einheit gerade laufenden Mikroprogramms zu beenden, wenn ein Mikrobefehl für bedingte Verzweigung, deren Berechnung nicht von der Einheit ausgeführt wird, erfaßt wird, daß die Einheiten untereinander über eine Algorithmusverbindung (ALGO) verbunden sind, die der die Verzweigungsbedingung berechnenden Einheit ermöglicht, das Ergebnis der Berechnung an die anderen Einheiten zu übertragen, wodurch die Fortsetzung der in den anderen Einheiten beendeten Mikroprogramme zugelassen wird.

9. Prozessor nach einem der Ansprüche 2 bis 8, dadurch gekennzeichnet, daß die Speichermittel (CA) durch einen Cache-Speicher gebildet sind und daß die Schnittstellenmittel (ICU) des Cache-Speichers wenigstens zwei unabhängige Pufferspeicher (OB1, OB2) enthalten, die eingangsseitig mit dem Ergebnisbus und mit dem Cache-Speicher und ausgangsseitig mit dem Operandenbus (OPE) und dem Cache-Speicher verbunden sind.

10. Prozessor nach einem der Ansprüche 1 bis 9, dadurch gekennzeichnet, daß die Einheiten mit Ausnahme der Adressierungseinheit (EAD) eine Einheit für Binär- und Dezimalrechnung (BDP) und eine Einheit für Fließkommarechnung (FPP) sind.

## Claims

1. A processor for a data processing system comprising a plurality of microprogrammed processing units sharing out all the functions of said processor among themselves, each unit being assigned to the execution of a subassembly of functions of said processor, said units being connected to storage means (CA) containing the instructions of the programs to be executed and the operands, at least one of said units being a unit (EAD) for addressing said storage means (CA) in order to obtain instructions and operands, said units (U1, U2, U3) each comprising its own control block (1) for decoding the instructions supplied by the storage means (CA) and executing autonomously the functions defined by said instructions, said processor being characterised in that an instruction is subdivided into several successive stages each consigned to a specific processing unit, and in that each unit comprises synchronisation means (15, 16, 17, 18, 19) for authorising or interrupting the execution of the microprogram defined by the current instruction in said unit and in that said synchronisation means interrupts (NOEX) said execution as long as:
- either an operand contained in said storage means (CA) and necessary for said execution is not effectively received by said unit,
- or a result expected by said unit and calculated by another unit is not effectively received by said unit,
- or a result calculated in said unit cannot be effectively transmitted to the unit or the storage means for which said result is intended.

2. A processor according to Claim 1, characterised in that said storage means (CA) comprise interface means (ICU) connected to a first bus (OPE), known as the operand bus, and to a second bus (RES), known as the results bus, said first and second buses serving respectively for reading the operands and writing the results in said storage means (CA), in that each unit (EAD, BDP, FPP) is connected respectively by a first and a second interface to said operand bus (OPE) and results bus (RES), in that each unit (U1, U2, U3) comprises means (3) for receiving and detecting a first ownership indicator (OPE-OWN) associated with the operand bus (OPE) and means (3A) for transmitting, to the other units, said first ownership indicator (OPE-OWN), in that each unit comprises means (3) for receiving and detecting a second ownership indicator (RES-OWN) associated with the results bus (RES) and means (3B) for transmitting to the other units said second ownership indicator (RES-OWN), in that said units are connected together by first and second monitoring links (CD-OPE, CD-RES) allowing the transmission of said first and second indicators respectively, in that one of the conditions for actual reception of an operand by a unit is the detection by said unit of said first indicator (OPE-OWN) and in that one of the conditions for actual transmission of a result by a unit is the detection by said unit of said second indicator (RES-OWN).

3. A processor according to Claim 2, characterised in that said storage means (CA) are connected to said units by operand transmission notification links associated with the operand bus (OPE) and comprises means for transmitting, over these links, operand transmission signals (SEND) when said storage means transmit an operand, in that each unit comprises means (3) for receiving and detecting said operand transmission signals (SEND) and in that another condition for actual reception of an operand by a unit is the detection by said unit of an expected transmission signal (SEND).

4. A processor according to Claim 3, characterised in that said units are connected to said storage means (CA) by acknowledgment links associated with the operand bus (OPE) and in that each unit comprises means (3) for transmitting, over said acknowledgment links, an acknowledgment signal (GOT) when an operand is actually received by said unit, so as to inform said storage means (CA) thereof.

5. A processor according to one of Claims 2 to 4, characterised in that said storage means (CA) and said units are connected together by availability links associated with the results bus (RES) and each comprise means for exchanging, over these links, availability signals (GET, EMPTY) and in that another condition for actual transmission of a result by a unit is the detection by said unit of an availability signal (GET, EMPTY) transmitted by the addressee of the result.

6. A processor according to one of Claims 2 to 5, characterised in that said units are connected together by result transmission notification links associated with the results bus (RES), said units comprising means for exchanging, over these links, result transmission signals (RES-CP) and addressee signals (DEST), and in that said result transmission signals (RES-CP) and said addressee signals (DEST) are sent by the unit that owns the results bus (RES) when said owning unit sends data over the results bus (RES) to the unit identified by said addressee signals (DEST) and in that the condition for actual reception of a result by a unit is the detection of a result transmission signal (RES-CP) and the coincidence of said addressee signals (DEST) with the identity of said unit.

7. A processor according to one of Claims 2 to 6, characterised in that the respective ownerships (OPE-OWN, RES-OWN) of the operand bus (OPE) and the results bus (RES) at the start of execution of the microprogram of the current instruction are determined by the control block of each unit depending on the operation code of said instruction and in that said ownerships can be modified during execution of said microprogram by the units that own said buses (OPE, RES).

8. A processor according to one of Claims 2 to 7, characterised in that each unit comprises means (1 5, 19) for suspending the execution of the current microprogram in said unit at the time of detecting a conditional connection microinstruction, the calculation of which is not performed by said unit, in that said units are connected together by an algorithmic link (ALGO) allowing the unit that calculates the connection condition to transmit the result of said calculation to the other units, thus authorising the continuance of suspended microprograms in said other units.

9. A processor according to one of Claims 2 to 8, characterised in that said storage means (CA) are constituted by an ante-memory and in that said interface means (ICU) of said ante-memory comprise at least two independent buffers (OB1, OB2) connected at their input to the results bus (RES) and to the ante-memory and connected at their output to the operand bus (OPE) and to the ante-memory.

10. A processor according to one of Claims 1 to 9, characterised in that said units are, in addition to the addressing unit (EAD), a binary and decimal calculation unit (BDP) and a floating point calculation unit (FPP).
